# FASCICULE DE BREVET EUROPEEN

(11) **EP 2 324 534 B1**
(45) Date de publication et mention de la délivrance du brevet: **03.10.2018**
(21) Numéro de dépôt: 09740472.7
(22) Date de dépôt: 19.08.2009
(51) Int. Cl.: H01R 11/22, H01R 4/48, H01R 24/28, H01R 24/76, H01R 13/52, H02G 15/02, F16B 21/18, H01R 4/50

(54) **DISPOSITIF DE CONNEXION ENTRE UN CABLE ELECTRIQUE ET UNE STRUCTURE CONDUCTRICE, NOTAMMENT POUR CIRCUIT DE RETOUR DE COURANT.**
VERBINDUNGSEINRICHTUNG ZWISCHEN EINEM ELEKTRISCHEN KABEL UND EINER LEITENDEN STRUKTUR, INSBESONDERE FÜR EINE STROMRÜCKKEHRSCHALTUNG
CONNECTION DEVICE BETWEEN AN ELECTRICAL CABLE AND A CONDUCTING STRUCTURE, ESPECIALLY FOR A CURRENT RETURN CIRCUIT

(30) Priorité: 21.08.2008 FR 0855657; 25.02.2009 FR 0951196
(43) Date de publication de la demande: 25.05.2011
(73) Titulaire: Safran Electrical & Power, 31702 Blagnac Cedex (FR)
(72) Inventeur: BIESSE, Jean-Luc, F-81500 Saint Lieux Les Lavaur (FR); LAURENT, Didier, F-31620 Fronton (FR); ROQUES, Serge, F-31700 Cornebarrieu (FR)
(74) Mandataire: Intès, Didier Gérard André
(86) Numéro de dépôt international: PCT/FR2009/051602
(87) Numéro de publication internationale: WO 2010/020733

(56) Documents cités:
- EP-A- 0 422 372
- EP-A- 1 253 671
- DE-A1- 10 211 634
- DE-A1- 19 714 511
- US-A- 5 518 332
- US-A1- 2007 184 700

## Description

L'invention se rapporte à un dispositif de connexion entre un câble électrique et une structure conductrice quelconque. A titre d'application préférentielle l'invention concerne l'interconnexion des circuits de retour de courant, notamment dans un avion.

Un exemple de dispositif de connexion est celui décrit, pour le domaine de l'automobile, dans la publication de demande de brevet allemand DE 197 14 511 A1.

Dans les aéronefs modernes, de plus en plus de structures métalliques sont remplacées par des structures en carbone notamment dans le fuselage. Ceci nécessite de réaliser un circuit de retour de courant spécifique pour les équipements électroniques, constitué d'éléments conducteurs indépendants (câbles, bandes conductrices, etc) électriquement interconnectés.

On a proposé d'utiliser des câbles interconnectés par des cosses serties à des éléments de structure conducteurs, par exemple des bandes métalliques plates. Les cosses sont fixées par des rivets. Cette solution est efficace du point de vue électrique mais ne permet pas une déconnexion simple et rapide, parfois nécessaire pour détecter des défauts et/ou pour effectuer des opérations de maintenance. Ce type de solution oblige en effet à percer les rivets pour déconnecter les éléments conducteurs. Cette destruction des rivets est une perte de temps et il n'est pas toujours facile de poser de nouveaux rivets aux emplacements où ont été effectuées les déconnexions.

En outre, dans le domaine de l'aéronautique, les normes imposent un verrouillage du dispositif de connexion, une bonne étanchéité de la zone de contact, une immobilisation en rotation, notamment.

L'invention permet de résoudre tous ces problèmes, notamment le verrouillage du contact et l'étanchéité.

Plus particulièrement, l'invention concerne en premier lieu un dispositif de connexion entre un câble électrique et une structure conductrice, caractérisé en ce qu'il comporte un socle de raccordement de type femelle, fixé à ladite structure conductrice et une fiche de type mâle raccordée à une extrémité dudit câble, en ce que ledit socle comporte un perçage conformé et dimensionné pour recevoir, avec contact électrique, ladite fiche, en ce que ladite fiche comporte une gorge et en ce qu'un ressort de verrouillage est monté sur ledit socle de raccordement et comporte une branche flexible susceptible de s'engager dans ladite gorge lorsque ladite fiche est engagée dans ledit perçage.

Ladite gorge est pratiquée à distance de l'extrémité de ladite fiche, ledit perçage dudit socle présente un orifice d'entrée par lequel la fiche est engagée, la longueur de la fiche et celle dudit perçage sont telles que ladite gorge se situe en deçà de l'orifice d'entrée Ladite gorge est pratiquée à distance de l'extrémité de ladite fiche, ledit perçage dudit socle présente un orifice d'entrée par lequel la fiche est engagée, la longueur de la fiche et celle dudit perçage sont telles que ladite gorge se situe en deçà de l'orifice d'entrée lorsque la fiche est engagée dans ledit perçage et ledit ressort de verrouillage comporte une coiffe conformée pour coopérer à la fois avec ladite gorge et avec un rebord saillant dudit socle.

Le perçage du socle est avantageusement un trou borgne.

Selon un mode de réalisation avantageux, la fiche se prolonge par une douille à paroi déformable constituant un fût à sertir. L'âme conductrice du câble électrique est engagée dans un trou borgne de cette douille et immobilisé par écrasement de la paroi de celui-ci.

L'invention sera mieux comprise et d'autre avantages de celle-ci apparaitront plus clairement à la lumière de la description qui va suivre d'un mode de réalisation actuellement préféré d'un dispositif de connexion conforme à son principe, donnée uniquement à titre d'exemple et faite en référence aux dessins annexés dans lesquels :
- la figure 1 est une vue générale en coupe I-I de la figure 2 du dispositif de connexion conforme à un exemple comparatif, la connexion étant établie;
- la figure 2 est une vue selon la flèche II de la figure 1;
- la figure 3 est une vue analogue à la figure 1, les éléments du dispositif de connexion étant séparés ;
- la figure 4 est une vue générale semblable à la figure 1, illustrant une variante du dispositif conforme à l'invention ;
- la figure 5 est une vue analogue à la figure 4, les éléments du dispositif de connexion étant séparés ;
- la figure 6 représente la coiffe de cette variante, vue selon la flèche VI de la figure 5 ;
- la figure 7 est une vue d'une variante de la coiffe selon une coupe VII-VII de la figure 8 ;
- la figure 8 est une vue selon la flèche VIII de la figure 7 ; et
- la figure 9 est une vue selon la flèche IX de la figure 7 ;
- la figure 10 est une vue en élévation d'un mode de réalisation du dispositif conforme à l'invention, la fiche étant représentée en coupe ;
- les figures 11 à 13 illustrent l'assemblage et le verrouillage de la fiche sur son socle ;
- la figure 14 est une vue de détail selon la flèche XIV de la figure 10 ;

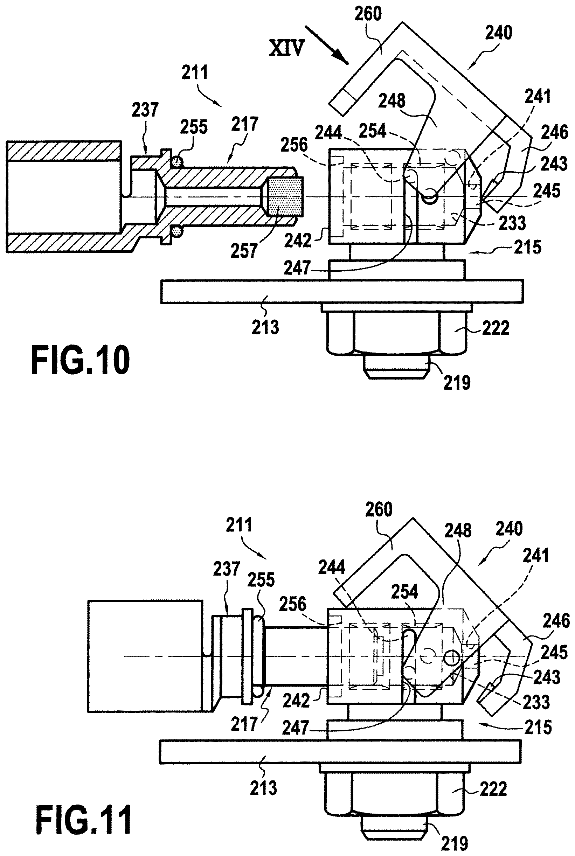

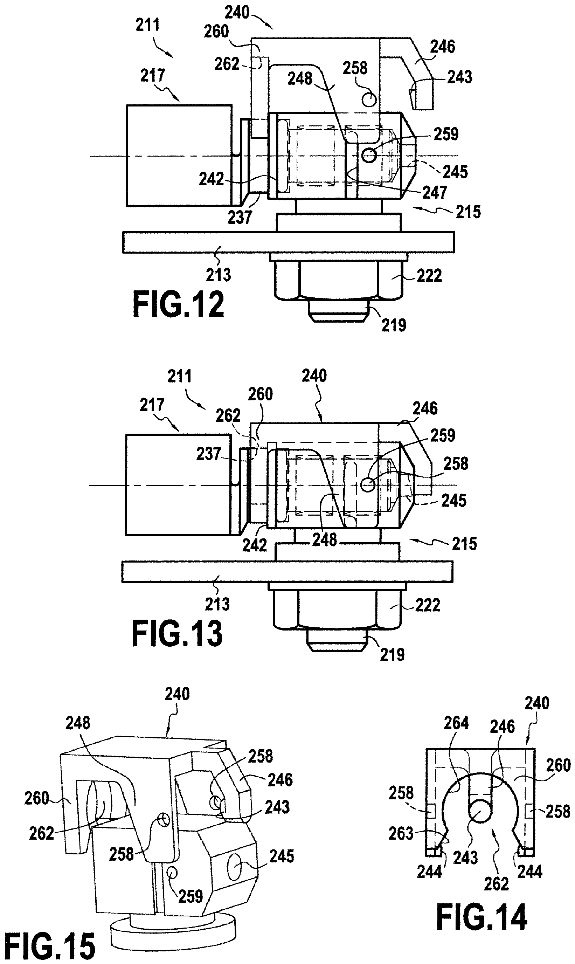

- la figure 14 est une vue de détail selon la flèche XIV de la figure 10 ;
- la figure 15 est une vue de détail en perspective du socle et de la coiffe ;

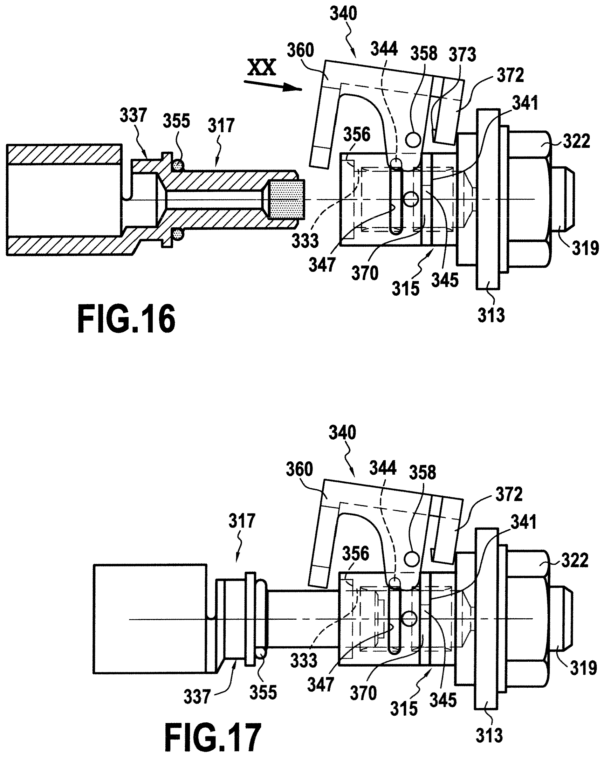

- la figure 16 illustre un autre mode de réalisation d'un dispositif conforme à l'invention représenté de façon analogue à la figure 10 ;
- les figures 17 à 19 illustrent le montage et le verrouillage du dispositif ; et

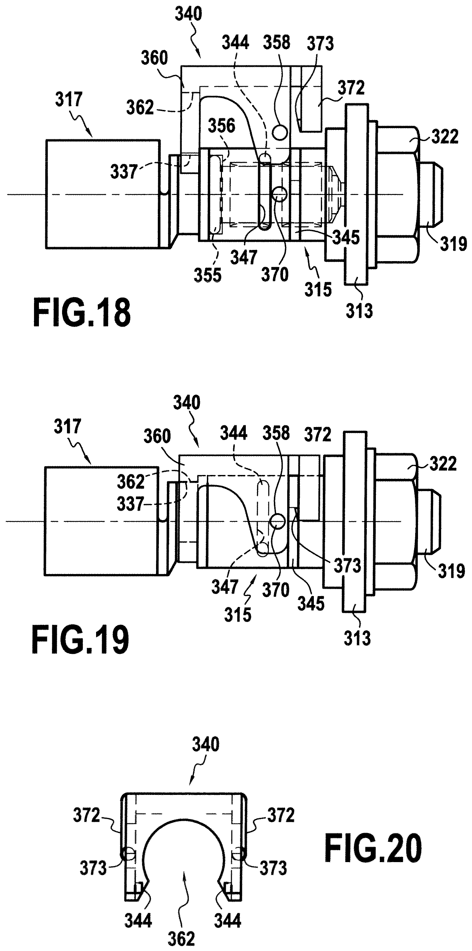

- la figure 20 est une vue de détail selon la flèche XX de la figure 16.

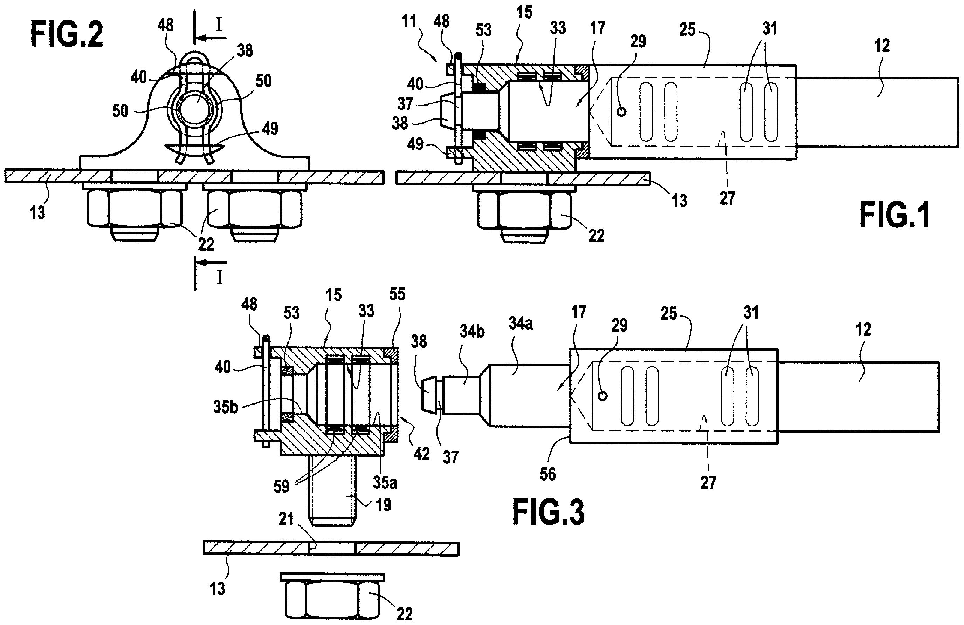

En se reportant aux figures 1 à 3, on distingue un dispositif de connexion 11 entre un câble électrique 12 et une structure conductrice 13, ici un conducteur plat, comme par exemple une barre faisant partie d'un circuit de retour de courant dans un aéronef. Le dispositif de connexion se compose d'un socle de raccordement 15 de type femelle, fixé à la structure conductrice 13 et une fiche 17 de type mâle, raccordée à une extrémité dudit câble 12.

Le terme "câble électrique" doit être compris au sens large, il s'agit en fait de tout conducteur électrique susceptible de faire partie d'un réseau électrique câblé.

Le socle 15 est en métal à haute conductivité il comporte ici deux prolongements filetés 19 traversant deux trous 21 de la structure conductrice. Des écrous 22 engagés sur ces parties filetées viennent assurer à la fois le montage mécanique et le raccordement électrique entre le socle 15 et ladite structure conductrice 13. On pourrait prévoir un nombre différent de prolongements filetés pour la fixation.

Par ailleurs, la fiche 17, également en métal à haute conductivité se prolonge par une douille 25 à paroi déformable constituant un fût à sertir. Cette douille comporte donc un trou borgne 27 et sa paroi est de ce fait suffisamment mince pour permettre son écrasement. Une extrémité conductrice du câble électrique est engagée dans ce trou borgne et est immobilisée par écrasement et déformation permanente de la paroi. La douille 25 comporte aussi un trou ou une fente de contrôle 29 débouchant dans le trou borgne au voisinage de son extrémité interne. Ce trou de contrôle permet de vérifier la bonne insertion du câble électrique 12 dans le trou borgne 27 juste avant le sertissage. Les marques de sertissage 31 sont visibles sur les figures 1 et 3, à titre d'illustration.

Le socle de raccordement 15 comporte un perçage 33 conformé et dimensionné pour accueillir, avec contact électrique, ladite fiche 17. Comme représenté la fiche 17 comporte deux parties 34a, 34b de diamètres différents et par conséquent le perçage 33 du socle 15 comprend deux trous alignés 35a, 35b de diamètres différents correspondants. L'extrémité de la fiche, de plus petit diamètre comporte une gorge 37. Le bout 38 de la fiche est chanfreiné jusqu'au bord de cette gorge. Par ailleurs, un ressort de verrouillage 40 est solidaire du socle de raccordement et comporte au moins une branche flexible susceptible de s'engager dans la gorge 37 lorsque la fiche est engagée dans le perçage 33. Le ressort est du type filaire en acier élastique.

Plus précisément, le perçage 33 est traversant et présente donc un orifice d'entrée 42 par lequel la fiche est engagée et un orifice de sortie 44, de plus faible diamètre, par lequel le bout 38 de la fiche fait saillie, faisant également apparaître la gorge 37. La longueur de la fiche 17 et celle du perçage sont telles que la gorge 37 se situe au delà de l'orifice de sortie 44 du perçage 33 lorsque la fiche 17 est engagée dans celui-ci. Comme représenté, le ressort 40 est situé au voisinage de l'orifice de sortie 44 pour coopérer avec la gorge 37 de la fiche 17. Avantageusement, le ressort 40 a la forme d'une épingle approximativement en U, montée entre deux éléments en saillie 48, 49 du socle. Les branches de l'épingle comportent des parties courbes 50 en vis-à-vis, au voisinage de l'orifice de sortie et de part et d'autre de celui-ci. Ces parties courbes sont sur le trajet de la fiche et on comprend que celle-ci, grâce à son bout chanfreiné, écarte momentanément lesdites parties courbes 50 jusqu'à ce que celles-ci s'engagent dans la gorge 37. A partir de ce moment, la fiche 17 est immobilisée mécaniquement dans le socle.

Cette configuration de verrouillage mécanique est favorable à une bonne étanchéité des zones de contact électrique entre la fiche 17 et le socle 15. En effet, le socle comporte en outre un joint étanchéité annulaire 53 entourant intérieurement l'orifice de sortie 44. Ce joint vient donc s'appliquer sur la surface cylindrique de la partie de plus faible diamètre de la fiche. De l'autre côté, le socle comporte un joint d'entrée 55 fixé extérieurement autour de l'orifice d'entrée. Avantageusement la fiche comporte un épaulement 56 venant prendre appui contre ce joint d'entrée 55. Comme mentionné précédent, la coopération entre le ressort 40 et la gorge 37 assure aussi une compression du joint d'entrée 55 entre le socle 15 et l'épaulement 56.

Comme visible sur les dessins le perçage 33 renferme en outre deux bandes de contact 59 annulaire distantes l'une de l'autre. Ces bandes de contacts, en métal à très faible résistivité sont légèrement comprimés par la partie 34a de plus grand diamètre, de la fiche, ce qui améliore la qualité du contact électrique entre la fiche et le socle.

Ainsi, lors de la mise en place de la fiche 17 une double étanchéité est réalisée qui préserve entièrement la zone de contact électrique entre la fiche et le socle. Ladite fiche se trouve axialement immobilisée sans jeu axial grâce au ressort de verrouillage 40 et à la compression du joint d'entrée 55.

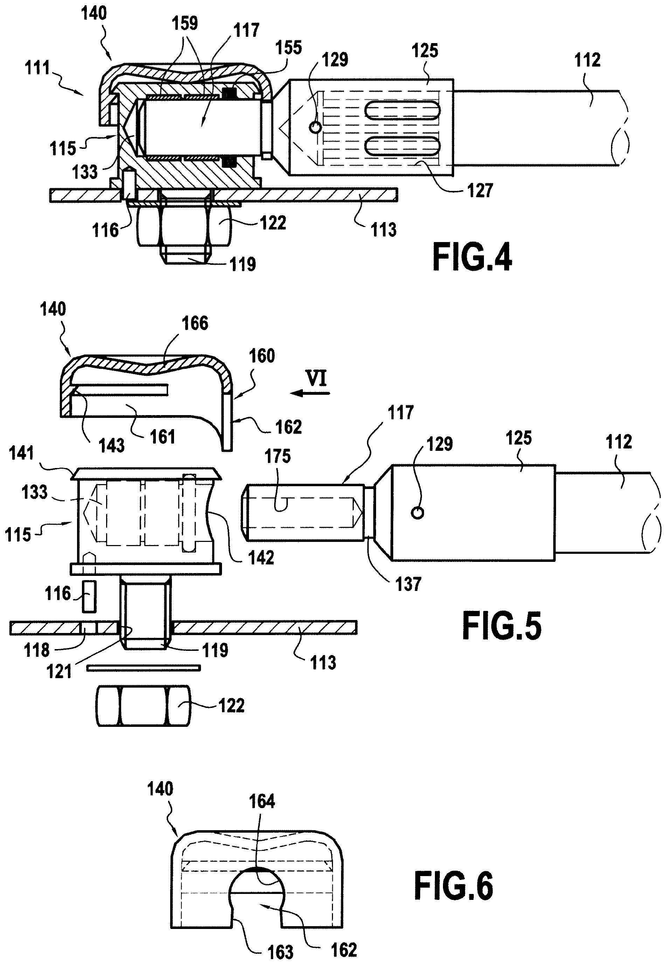

Dans le mode de réalisation des figures 4 à 6, les éléments analogues à ceux de l'exemple comparatif décrit ci-dessus portent les mêmes références numériques augmentées de 100. On distingue donc un dispositif de connexion 111 entre un câble électrique 112 et une structure conductrice 113 en forme de conducteur plat, à savoir une barre faisant partie d'un circuit de retour de courant dans un aéronef. Comme précédemment, le dispositif de connexion se compose d'un socle de raccordement 115 de type femelle, fixé à la structure conductrice 113 et une fiche 117 de type maie, raccordée à une extrémité du câble 112.

Le socle 115 est en métal à haute conductivité. Il comporte un seul prolongement fileté 119 traversant un trou 121 de la structure conductrice 113. Un écrou 122 engagé sur cette partie filetée assure le montage mécanique et le raccordement électrique entre le socle 115 et la structure conductrice 113. Il est à noter que le socle 115 peut être ici entièrement réalisé à partir d'une ébauche métallique cylindrique, par usinage, ce qui en réduit le coût. Une goupille 116 est insérée dans un logement du socle et vient se placer dans un perçage 118 réalisé dans la structure conductrice 113, pour éviter la rotation du socle.

Par ailleurs, la fiche 117, également en métal à haute conductivité se prolonge par une douille 125 à paroi déformable constituant un fut à sertir, comme dans l'exemple précédent. Cette douille comporte donc un trou borgne 127 à paroi mince, pour permettre son écrasement. Une extrémité conductrice du câble électrique 112 est engagée dans ce trou avant écrasement et déformation permanente de la paroi. Comme précédemment, la douille 125 comporte un trou ou une fente de contrôle 129.

Le socle de raccordement 115 comporte un perçage 133 conformé et dimensionné pour accueillir, avec contact électrique, la fiche 117. Contrairement au mode de réalisation précédent, la partie de la fiche 117 destinée à être engagée dans le perçage 133 a un diamètre constant. Le perçage 133, quant à lui, est un trou borgne de diamètre correspondant.

Comme dans l'exemple comparatif précédent, la fiche comporte une gorge 137 mais celle-ci est pratiquée à distance de l'extrémité de la fiche 117. Le perçage 133 du socle présente donc seulement un orifice d'entrée 142 par lequel la fiche est engagée. Comme cela est visible sur les dessins, la longueur de la fiche et celle du perçage sont telles que ladite gorge 137 se situe en-deçà de l'orifice d'entrée 142 lorsque la fiche est engagée dans le perçage du socle. Comme précédemment, ce perçage 133 renferme deux bandes de contact 159 annulaires, distantes l'une de l'autre. On pourrait en prévoir un plus grand nombre. Ces bandes de contact sont en métal à très faible résistivité et sont comprimées par la fiche lorsque celle-ci est engagée dans le perçage. Ce dernier abrite aussi un joint annulaire 155, par exemple un joint torique placé dans un logement à l'intérieur du perçage, au voisinage de l'orifice d'entrée. Ce joint peut être surmoulé directement dans le socle. Il possède une ou plusieurs lèvres permettant d'assurer l'étanchéité lorsque la fiche est engagée.

Le dispositif est équipé d'un ressort de verrouillage qui comporte une coiffe 140 conformée pour coopérer à la fois avec la gorge 137 et avec un rebord d'accrochage 141, saillant et annulaire, du socle. Dans l'exemple, ce rebord saillant est défini à l'extrémité du socle 115 opposée à celle qui porte le prolongement fileté 119.

La coiffe comporte des doigts flexibles 161 et les extrémités de ces doigts sont munies de dentures 143, formant harpons coopérant avec ledit rebord saillant du socle.

De plus, la coiffe 140 comporte une extension latérale 160, ici relativement flexible, dans laquelle est définie une ouverture latérale 162, conformée et dimensionnée pour coopérer avec la gorge 137 de la fiche. Plus précisément, dans cet exemple, l'ouverture 162 est une échancrure comprenant une partie droite 163 de montage, ouverte sur un bord de ladite extension latérale et une partie à contour arrondi 164 retenue avec jeu dans ladite gorge 137. La partie droite de montage débouche dans la partie à contour arrondi. La largeur de la partie droite 163 est très légèrement inférieure au diamètre du fond de la gorge 137, tandis que la partie à contour arrondi 164 est un peu plus large que le diamètre du fond de gorge. De cette façon, la coiffe est emboîtée à force sur la fiche et reste rattachée à celle-ci, avec un jeu entre l'extension latérale et le fond de la gorge.

La coiffe comporte une protubérance élastique 166 prenant appui sur l'extrémité du socle 115. Cette protubérance élastique peut être réalisée par une déformation centrale de la coiffe ou par une patte obtenue par une découpe.

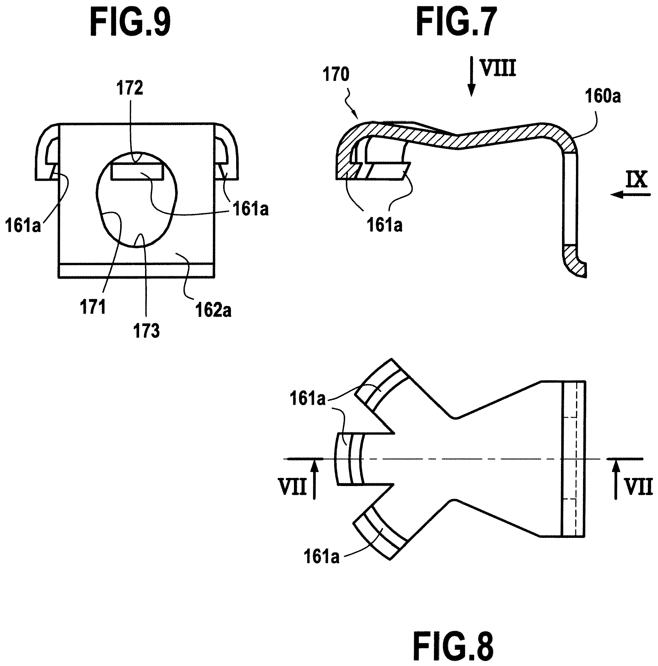

Comme on le voit sur les figures 7 à 9, la coiffe 170 peut avoir une forme différente. Par exemple, le nombre de doigts flexibles 161a peut être plus réduit que dans le mode de réalisation précédent en sorte que la coiffe se résume ici à une sorte de fourche à trois branches prolongée par l'extension latérale 160a.

Selon une autre possibilité, l'ouverture pratiquée dans l'extension latérale 162a peut être un trou oblong 171 à contour fermé comprenant une partie circulaire 172 de diamètre sensiblement égal à celui de la fiche et une partie circulaire 173 de diamètre inférieur à celui de la fiche mais supérieur au diamètre du fond de ladite gorge. Ainsi, le montage de la coiffe 170 se fait en faisant coulisser la fiche dans la partie circulaire de plus grand diamètre du trou oblong 171 jusqu'à ce que l'extension latérale s'engage dans la gorge 137. Au moment du montage sur le socle, l'extension latérale bascule et se verrouille dans la gorge par engagement de la partie circulaire de plus faible diamètre. Ainsi, avantageusement, la coiffe devient imperdable.

Comme représenté, la fiche 117 peut être allégée en pratiquant un trou borgne 175 à partir de son extrémité distale.

On notera que le mode de réalisation des figures 4 à 8 présente l'avantage d'une étanchéité plus fiable, plus simple et moins coûteuse, ne nécessitant qu'un seul joint.

D'autres modifications sont possibles, en particulier en ce qui concerne la structure du ressort de verrouillage. Par exemple, celui-ci peut être en deux parties, une coiffe du genre décrit ci-dessus et un moyen élastique logé au fond du trou borgne du socle pour repousser élastiquement la fiche et renforcer l'effet de verrouillage. Ceci permet aussi d'utiliser une coiffe sensiblement plus rigide et donc plus robuste.

Les figures 10 à 15 illustrent un autre mode de réalisation semblable à celui des figures 4 à 9. Les éléments analogues portent les mêmes références numériques augmentées encore de 100. On reconnaît donc un dispositif de connexion 211 comprenant un socle de raccordement 215 en métal à haute conductivité, fixé à une structure conductrice 213 par un prolongement fileté 219 et un écrou 222. Le dispositif comporte aussi une fiche 217 en métal à haute conductivité. Le socle comporte un perçage 233 pour accueillir la fiche 217. Le perçage 233 est ici parallèle à la structure conductrice 213. La fiche comporte une gorge 237 pratiquée à distance de son extrémité. Une fois la fiche engagée complètement dans le perçage 233, la gorge 237 se situe en-deçà de l'orifice d'entrée 242 du perçage 233. On reconnaît aussi les deux bandes de contact 259 annulaires en métal à très faible résistivité, agencées à l'intérieur du perçage 233.

Le dispositif comporte aussi une coiffe de verrouillage 240 conformée pour coopérer à la fois avec la gorge 237 et un rebord d'accrochage 241 du socle, constitué ici par le bord d'un trou 245 situé dans le prolongement axial du perçage 233, à l'opposé de l'orifice d'entrée 242. Plus précisément, la coiffe 240 est munie d'un doigt 246 comprenant un crochet 243 (en forme de cylindre biseauté) coopérant avec le bord du trou 245. La coiffe comporte comme précédemment une extension latérale 260 dans laquelle est définie une ouverture 262 conformée et dimensionnée pour coopérer avec la gorge 237 de ladite fiche. Comme visible sur la figure 14, l'ouverture 162 est une échancrure comprenant une partie de montage 263 évasée vers l'extérieur et ouverte sur un bord de l'extension latérale 260. Cette partie de montage débouche dans une partie à contour arrondi 264 qui vient s'encastrer dans la gorge 237.

De plus, la coiffe est munie de deux ergots 244 situés intérieurement en vis-à-vis sur des faces latérales parallèles 248. Ces ergots sont assujettis à se déplacer dans des rainures parallèles 247 opposées, rectilignes, ménagées dans le socle 215 en sorte que ladite coiffe 240 soit rattachée de façon imperdable audit socle.

De plus, la fiche est munie d'un joint annulaire 255 situé près de la gorge 237 tandis que le socle comporte un épaulement interne 256 jouxtant l'orifice d'entrée 242.

Dans l'exemple décrit, le trou 245 communique avec le perçage 233. Pour assurer l'étanchéité après montage, l'extrémité de la fiche porte un joint cylindrique 257 qui vient se comprimer au fond du perçage 233.

Bien entendu, le socle peut être dépourvu de tronçons filetés 219 pour pouvoir être directement soudé sur la structure conductrice 213.

Le fonctionnement est illustré par les figures 11 à 13. La coiffe étant basculée comme illustré sur la figure 11, l'orifice d'entrée 242 du perçage du socle est dégagé et on peut engager la fiche 217 dans le socle. Ensuite, comme représenté sur la figure 12, la coiffe 240 est basculée tout en étant maintenue au maximum au-dessus du socle de façon que l'ouverture 262 soit positionnée au-dessus de la gorge 237 de la fiche. Ceci n'est possible que lorsque la fiche 217 est complètement enfoncée dans le perçage 233 du socle et que le joint annulaire 255 n'est plus visible, étant en contact avec l'épaulement 256. Dans cette position, le joint 257 est également comprimé au fond du perçage du socle. En maintenant la fiche dans cette position, il suffit alors d'abaisser la coiffe 240 sur son socle comme représenté à la figure 13 jusqu'à ce que l'extension latérale 260 se verrouille, après déformation élastique, sur le diamètre de la gorge 237 et que le crochet 243 coopère avec le bord 241 du trou 245. Une fenêtre de contrôle de positionnement constituée par un trou 258 de la coiffe arrive en regard d'une zone colorée 259 du socle donnant une indication visuelle de verrouillage à l'utilisateur. En fait, le dispositif comporte un trou 258 sur chaque face latérale 248 et le socle comporte deux zones colorées 259 correspondantes.

Les figures 16 à 20 illustrent encore un autre mode de réalisation où les éléments de structure analogue portent les mêmes références numériques encore augmentées de 100. Ces éléments ne seront pas décrits à nouveau en détail. Dans ce mode de réalisation, le perçage 333 du socle destiné à accueillir la fiche 317 est perpendiculaire à un plan de montage de celui-ci, c'est-à-dire à la structure conductrice 313. Autrement dit, après montage, l'axe de la fiche 317 et celui du tronçon fileté 319 assurant la fixation du socle 315 sont confondus.

Dans ce mode de réalisation, le socle 315 comporte deux rebords d'accrochage 341 précités, situés latéralement. Il s'agit de trous 345 ménagés dans des nervures latérales 370 parallèles et opposées du socle. La coiffe comporte aussi deux doigts parallèles 372 comprenant des crochets 373 coopérant respectivement avec lesdits rebords d'accrochage 341, c'est-à-dire les trous 345, la coiffe 340 est pour le reste sensiblement identique à celle du mode de réalisation précédent. Elle comporte notamment bien entendu, pour la fonction imperdabilité, deux ergots 344 engagés dans deux rainures rectilignes 347 du socle, parallèles.

Comme précédemment, la coiffe comporte au moins une fenêtre de contrôle de positionnement (un trou 358) et le socle comporte une zone colorée 359 en regard de laquelle vient se positionner ladite fenêtre lorsque la coiffe est correctement positionnée (voir figure 19). Le montage illustré aux figures 17 à 19 est comparable à celui du mode de réalisation précédent. La coiffe 340 étant relevée, on engage la fiche 317 dans le perçage 333 du socle jusqu'à ce que le joint annulaire 355 vienne en appui sur l'épaulement 356. Ensuite, la coiffe 340 est basculée jusqu'à ce que l'extension latérale 360 s'engage dans la gorge 337 de la fiche (figure 18). La coiffe est ensuite abaissée jusqu'à ce que l'extension 360 se verrouille, par déformation élastique, sur le diamètre de la gorge 337 et que les crochets 373 s'engagent dans les trous 345.

## Revendications

1. Dispositif de connexion entre un câble électrique et une structure conductrice, comportant un socle de raccordement (115,215,315) de type femelle, fixé à ladite structure conductrice et une fiche (117,217,317) de type mâle, ledit socle (115,215,315) comportant un perçage (133,233,333) conformé et dimensionné pour recevoir, avec contact électrique, ladite fiche, qui comporte une gorge (137,237,337) pratiquée à distance de l'extrémité de ladite fiche, un ressort de verrouillage (140,240,340) étant monté sur ledit socle de raccordement et comportant une branche flexible susceptible de s'engager dans ladite gorge (137,237,337) lorsque ladite fiche est engagée dans ledit perçage, qui présente un orifice d'entrée par lequel la fiche est engagée, le dispositif de connexion étant **caractérisé en ce que** ladite fiche est raccordée à une extrémité dudit câble (112,212,312), **en ce que** la longueur de la fiche et celle dudit perçage sont telles que ladite gorge (137,237,337) se situe en deçà de l'orifice d'entrée (142,242,342) lorsque la fiche est engagée dans ledit perçage et **en ce que** ledit ressort de verrouillage comporte une coiffe (140,240,340) conformée pour coopérer à la fois avec ladite gorge et avec un rebord d'accrochage (141,241,341) dudit socle.

2. Dispositif selon la revendication 1, **caractérisé en ce que** ladite coiffe comporte une extension latérale (160,260,360) dans laquelle est définie une ouverture (162,262,362) conformée et dimensionnée pour coopérer avec la gorge (137,237,337) de ladite fiche.

3. Dispositif selon la revendication 2, **caractérisé en ce que** ladite ouverture (162,262) est une échancrure comprenant une partie de montage (163,263), ouverte sur un bord de ladite extension latérale et débouchant dans une partie à contour arrondi (164,264), retenue dans ladite gorge.

4. Dispositif selon la revendication 1, **caractérisé en ce que** ledit perçage (133) dudit socle (115) est un trou borgne.

5. Dispositif selon la revendication 1 ou 4, **caractérisé en ce que** ladite coiffe (140) comporte des doigts flexibles (161) et **en ce que** les extrémités de ces doigts sont munies de dentures (143) formant harpons, coopérant avec ledit rebord d'accrochage (141).

6. Dispositif selon la revendication 4, **caractérisé en ce que** ladite ouverture est un trou oblong (171) à contour fermé comprenant une partie circulaire (172) de diamètre sensiblement égal à celui de ladite fiche et une partie circulaire (173) de diamètre inférieur à celui de ladite fiche mais supérieur au diamètre du fond de ladite gorge.

7. Dispositif selon l'une des revendications précédentes, **caractérisé en ce que** ladite coiffe comporte une protubérance élastique (166) prenant appui sur l'extrémité dudit socle.

8. Dispositif selon l'une des revendications précédentes, **caractérisé en ce que** ledit perçage (133) renferme au moins une bande de contact (159) annulaire.

9. Dispositif selon la revendication 8, **caractérisé en ce que** ledit perçage renferme plusieurs bandes de contact (159) distantes l'une de l'autre.

10. Dispositif selon l'une des revendications précédentes, **caractérisé en ce que** ladite fiche (117) se prolonge par une douille (125) à paroi déformable constituant un fût à sertir, ledit câble électrique étant engagé dans un trou borgne (127) de cette douille et immobilisé par écrasement de sa paroi.

11. Dispositif selon la revendication 10, **caractérisé en ce que** ladite douille (125) comporte un trou ou une fente de contrôle (129), débouchant dans ledit trou borgne.

12. Dispositif selon l'une des revendications 1 à 3, **caractérisé en ce que** ladite coiffe est munie de deux ergots (244) assujettis à se déplacer dans des rainures parallèles (247) opposées dudit socle (240), en sorte que cette coiffe soit rattachée de façon imperdable audit socle.

13. Dispositif selon la revendication 12, **caractérisé en ce que** ledit rebord d'accrochage (241) dudit socle est constitué par un trou (245) et **en ce que** ladite coiffe est munie d'un doigt (246) comprenant un crochet (243) coopérant avec le bord de ce trou.

14. Dispositif selon la revendication 12 ou 13, **caractérisé en ce que** ladite fiche (217) est pourvue d'un joint annulaire (255) venant au contact d'un épaulement interne (256) dudit socle.

15. Dispositif selon la revendication 14, **caractérisé en ce que** ledit trou (245) est débouchant dans le prolongement axial dudit perçage (233) et **en ce que** l'extrémité de ladite fiche porte un joint d'étanchéité (257).

16. Dispositif selon la revendication 12, **caractérisé en ce que** le perçage (333) dudit socle destiné à accueillir la fiche (317)est perpendiculaire à un plan de montage de celui-ci, **en ce que** ledit socle comporte deux rebords d'accrochage (341) précités sous forme de trous (345) disposés latéralement et **en ce que** ladite coiffe (340) comporte deux doigts parallèles (372) comprenant des crochets coopérant respectivement avec lesdits rebords d'accrochage.

17. Dispositif selon l'une des revendications 12 à 16, **caractérisé en ce que** ladite coiffe (240) comporte une fenêtre de contrôle de positionnement (258) et **en ce que** le socle comporte une zone colorée (259) en regard de laquelle vient se positionner ladite fenêtre lorsque la coiffe est correctement positionnée.

## Patentansprüche

1. Verbindungsvorrichtung zwischen einem elektrischen Kabel und einer leitenden Struktur, umfassend eine Anschlussbasis (115, 215, 315) des weiblichen Typs, die an der leitenden Struktur befestigt ist, und einen Stecker (117, 217, 317) des männlichen Typs, wobei die Basis (115, 215, 315) eine Bohrung (133, 233, 333) aufweist, die ausgebildet und dimensioniert ist, um mit elektrischem Kontakt den Stecker aufzunehmen, die eine Nut (137, 237, 337) aufweist, die beabstandet von dem Ende des Steckers gebildet ist, wobei eine Verriegelungsfeder (140, 240, 340) auf der Anschlussbasis befestigt ist und einen flexiblen Schenkel aufweist, der in die Nut (137, 237, 337) eingreifen kann, wenn der Stecker in der Bohrung in Eingriff ist, der eine Eintrittsöffnung aufweist, durch die der Stecker in Eingriff gebracht wird, wobei die Verbindungsvorrichtung **dadurch gekennzeichnet ist, dass** der Stecker an einem Ende des Kabels (112, 212, 312) angeschlossen ist, dass die Länge des Steckers und jene der Bohrung derart sind, dass sich die Nut (137, 237, 337) unterhalb der Eintrittsöffnung (142, 242, 342) befindet, wenn der Stecker in die Bohrung in Eingriff gebracht wird, und dass die Verriegelungsfeder eine Kappe (140, 240, 340) aufweist, die ausgebildet ist, um gleichzeitig mit der Nut und mit einem Einhakrand (141, 241, 341) der Basis zusammenzuwirken.

2. Vorrichtung gemäß Anspruch 1, **dadurch gekennzeichnet, dass** die Kappe eine seitliche Erweiterung (160, 260, 360) aufweist, in der eine Öffnung (162, 262, 362) definiert ist, die ausgebildet und dimensioniert ist, um mit der Nut (137, 237, 337) des Steckers zusammenzuwirken.

3. Vorrichtung gemäß Anspruch 2, **dadurch gekennzeichnet, dass** die Öffnung (162, 262) eine Aussparung ist, die einen Befestigungsabschnitt (163, 263) aufweist, der an einem Rand der seitlichen Erweiterung offen ist und in einen Abschnitt mit abgerundeter Kontur (164, 264) mündet, der in der Nut gehalten ist.

4. Vorrichtung gemäß Anspruch 1, **dadurch gekennzeichnet, dass** die Bohrung (133) der Basis (115) ein Sackloch ist.

5. Vorrichtung gemäß Anspruch 1 oder 4, **dadurch gekennzeichnet, dass** die Kappe (140) flexible Finger (161) aufweist und dass die Enden dieser Finger mit Verzahnungen (143) versehen sind, die Harpunen bilden, die mit dem Einhakrand (141) zusammenwirken.

6. Vorrichtung gemäß Anspruch 4, **dadurch gekennzeichnet, dass** die Öffnung ein Langloch (171) mit geschlossener Kontur ist, das einen kreisförmigen Abschnitt (172) mit einem Durchmesser, der im Wesentlichen jenem des Steckers gleich ist, und einen kreisförmigen Abschnitt (173) mit einem Durchmesser aufweist, der kleiner als jener des Steckers, aber größer als der Durchmesser des Bodens der Nut ist.

7. Vorrichtung gemäß einem der vorhergehenden Ansprüche, **dadurch gekennzeichnet, dass** die Kappe eine elastische Protuberanz (166) aufweist, die auf dem Ende der Basis aufliegt.

8. Vorrichtung gemäß einem der vorhergehenden Ansprüche, **dadurch gekennzeichnet, dass** die Bohrung (133) mindestens einen ringförmigen Kontaktstreifen (159) enthält.

9. Vorrichtung gemäß Anspruch 8, **dadurch gekennzeichnet, dass** die Bohrung mehrere Kontaktstreifen (159) enthält, die voneinander entfernt sind.

10. Vorrichtung gemäß einem der vorhergehenden Ansprüche, **dadurch gekennzeichnet, dass** der Stecker (117) durch eine Hülse (125) mit verformbarer Wand verlängert wird, die eine Crimphülse bildet, wobei das elektrische Kabel in ein Sackloch (127) dieser Buchse eingreift und durch Quetschen ihrer Wand immobilisiert ist.

11. Vorrichtung gemäß Anspruch 10, **dadurch gekennzeichnet, dass** die Hülse (125) ein Loch oder einen Kontrollschlitz (129) aufweist, der in das Sackloch mündet.

12. Vorrichtung gemäß einem der Ansprüche 1 bis 3, **dadurch gekennzeichnet, dass** die Kappe mit zwei Spornen (244) versehen ist, die dazu bestimmt sind, in parallelen Nuten (247), die der Basis (240) gegenüberliegen, derart bewegt zu werden, dass diese Kappe unverlierbar an der Basis angebracht ist.

13. Vorrichtung gemäß Anspruch 12, **dadurch gekennzeichnet, dass** der Einhakrand (241) der Basis aus einem Loch (245) gebildet ist und dass die Kappe mit einem Finger (246) versehen ist, der einen Haken (243) aufweist, der mit dem Rand dieses Loches zusammenwirkt.

14. Vorrichtung gemäß Anspruch 12 oder 13, **dadurch gekennzeichnet, dass** der Stecker (217) mit einer ringförmigen Dichtung (255) versehen ist, die mit einer inneren Schulter (256) der Basis in Kontakt kommt.

15. Vorrichtung gemäß Anspruch 14, **dadurch gekennzeichnet, dass** das Loch (245) in die axiale Verlängerung der Bohrung (233) mündend ist und dass das Ende des Steckers eine Dichtung (257) trägt.

16. Vorrichtung gemäß Anspruch 12, **dadurch gekennzeichnet, dass** die Bohrung (333) der Basis, die dazu bestimmt ist, den Stecker (317) aufzunehmen, senkrecht zu einer Befestigungsebene davon ist, dadurch dass die Basis zwei oben genannte Einhakränder (341) in Form von Löchern (345), die seitlich angeordnet sind, aufweist, und dadurch, dass die Kappe (340) zwei parallele Finger (372) aufweist, die Haken aufweisen, die jeweils mit den Einhakrändern zusammenwirken.

17. Vorrichtung gemäß einem der Ansprüche 12 bis 16, **dadurch gekennzeichnet, dass** die Kappe (240) ein Kontrollfenster der Positionierung (258) aufweist und dadurch, dass die Basis eine farbige Zone (259) aufweist, der gegenüberliegend das Fenster angeordnet wird, wenn die Kappe richtig positioniert ist.

## Claims

1. A connection device between an electric cable and a conductive structure, comprising a female type connection receptacle (115,215,315), fastened to said conductive structure and a male type plug (117,217,317), said connection receptacle (115,215,315) comprising a bore (133,233,333) shaped and dimensioned to receive said plug with electrical contact, which plug includes a groove (137,237,337),formed at a distance from the end of said plug, a locking spring (140,240,340) being mounted on said connection receptacle and including a flexible branch suitable for engaging in said groove (137,237,337) when said plug is engaged in said bore, the connection device being **characterized in that** said plug is connected to one end of said cable (112,212,312), **in that** the length of said plug and the length of said bore are such that said groove (137,237,337) is situated outside the outlet orifice (142,242,342) when the plug is engaged therein and **in that** said locking spring comprises a cover (140,240,340) shaped to cooperate both with said groove and with an attachment rim (141,241,341)of said receptacle.

2. A device according to claim 1, **characterized in that** said cover has a lateral extension (160,260,360) with an opening (162,262,362) defined therein, the opening being shaped and dimensioned to co-operate with the groove (137,237,337) of said plug.

3. A device according to claim 2, **characterized in that** said opening (162,262) is a notch having a mounting portion (163,263) that opens into an edge of said lateral extension and that leads to a portion (164,264) of rounded outline that is retained in said groove.

4. A device according to claim 1, **characterized in that** said bore (133) in said receptacle (115) is a blind hole.

5. A device according to claim 1 or 4, **characterized in that** said cover (140) has flexible fingers (161), and **in that** the ends of said fingers are provided with teeth (143) forming barbs that co-operate with said attachment rim (141).

6. A device according to claim 41, **characterized in that** said opening is an oblong hole (171) with a closed outline having a circular portion (172) of diameter substantially equal to the diameter of said plug and a circular portion (173) of diameter smaller than the diameter of said plug but greater than the diameter of the bottom of said groove.

7. A device according to any one of the preceding claims 8, **characterized in that** said cover includes a resilient projection (166) bearing against the end of said receptacle.

8. A device according to any one of the preceding claims, **characterized in that** said bore (133) contains at least one annular contact spring (159).

9. A device according to claim 8, **characterized in that** said bore contains a plurality of contact springs (159) that are spaced apart from one another.

10. A device according to any one of the preceding claims, **characterized in that** said plug (117) is extended by a bushing (125) having a deformable wall constituting a crimping cylinder, said electric cable being engaged in a blind hole (127) of said bushing and being held by flattening its wall.

11. A device according to claim 10, **characterized in that** said bushing (125) includes an inspection slot or hole (129) opening out into said blind hole.

12. A device according to any one of claims 1 to 3, **characterized in that** said cover is provided with two studs (244) constrained to move in opposite parallel grooves (247) of said receptacle (240),so that the cover is held captive to said receptacle.

13. A device according to claim 12, **characterized in that** said attachment rim (241) of said receptacle is constituted by a hole (245) and **in that** said cover is provided with a finger (246) having a hook (243) cooperating with the edge of said hole.

14. A device according to claim 12 or claim 13, **characterized in that** said plug (217) is provided with an annular gasket (255) coming into contact with an internal shoulder (256) of said receptacle.

15. A device according to claim 14, **characterized in that** said hole (245) opens out in axial alignment with said bore (233), and **in that** the end of said plug carries a sealing gasket (257).

16. A device according to claim 12, **characterized in that** the bore (333) of said receptacle for receiving the plug (317) is perpendicular to a mounting plane thereof, **in that** said receptacle includes two above-mentioned attachment rims (341) in the form of holes (345) disposed laterally, and **in that** said cover (340) includes two parallel fingers (372) having hooks that co-operate with respective ones of said attachment rims.

17. A device according to any one of claims 12 to 16, **characterized in that** said cover (240) comprises a positioning inspection window (258) and **in that** the connection receptacle comprises a colored zone (259) with which said window is positioned in register when the cover is correctly positioned.
